Europäisches Patentamt

European Patent Office

Office européen des brevets

(19)

(11) Publication number: **0 052 401**
**B1**

(12) **EUROPEAN PATENT SPECIFICATION**

(45) Date of publication of patent specification: 01.08.84

(21) Application number: 81201236.7

(22) Date of filing: 30.10.81

(51) Int. Cl.³: **B 28 C 7/06, G 01 F 11/28, C 04 B 33/02, B 65 G 53/32**

(54) Method and device for measuring and dispensing powder at a preselected rate.

(30) Priority: 13.11.80 NL 8006219

(43) Date of publication of application:
26.05.82 Bulletin 82/21

(45) Publication of the grant of the patent:
01.08.84 Bulletin 84/31

(84) Designated Contracting States:
BE DE FR GB IT NL SE

(56) References cited:
FR - A - 1 411 454
GB - A - 774 982
GB - A - 2 041 772
US - A - 2 244 050
US - A - 2 646 975
US - A - 3 455 490
US - A - 3 758 034
US - A - 4 183 705

(73) Proprietor: B.V. Handelmaatschappij voorheen
Bernard Themans
Poulinkstraat 13
NL-7607 GS Almelo (NL)

(72) Inventor: Zijlstra, Lodewijk Theodoor
No. 14 Kervellaan
NL-7641 EG Wierden (NL)

(74) Representative: Schumann, Bernard Herman Johan
et al,
OCTROOIBUREAU ARNOLD & SIEDSMA
Sweelinckplein 1
NL-2517 GK The Hague (NL)

Courier Press, Leamington Spa, England.

# Description

The invention relates to a method and a device for dispensing powder at a preselected rate. Such a method and such a device are, in general, of interest for use in works in which predetermined powder doses are added to the raw material in order to improve processing of said raw material for a desired product or to impart a given consistency or colour to the product and they are particularly interesting for brick works in which very finely comminuted manganese oxide ($MnO_2$) is added to the clay or other raw material for the bricks in order to colour the bricks to be produced. In particular, accurate dosing of the fine $MnO_2$ powder, which is in a very dry state in behalf of transport and dosing when supplied to the user or dosing of said powder in the mixing and kneading device gives rise to difficulties during the transport of the raw material for the bricks to be made to said device, since unacceptable dust clouds are formed in the air around the dosing area.

The invention has for its object to provide a method and a device by which the difficulties hitherto experienced in dosing and admixing of the powder required for the product to be made are obviated. According to the invention this is achieved in the first place by using a method in which dry powder is passed from a feedstock or bunker in a predetermined flow through a dust-tight space, in which space it is wetted. In this case dosing is carried out in a dust-tight space and the powder is spread only in the moist state on the raw material for the product to be made and passed along herewith or it is shed in a mixing and kneading machine or other processing device, which is open at the top. In the moist state the powder will not disperse so that the ambient air will not be dust-laden.

According to the invention it is advantageous to proceed so that from a first compartment of the dust-tight space communicating with the feedstock or the bunker the dry powder is passed, for example, in metered portions to a second compartment of said space for wetting the powder. Dosing is then carried out after the powder is introduced into the closed space and before it is wetted.

Dosing of the powder can be facilitated and performed with greter accuracy when the powder is fluidized in the first compartment of the dust-tight space. In this way formation of lumps and bridges in the powder mass in the dust-tight space preceding the dosing device is avoided.

The device for carrying out the method according to the invention may be characterized by a supply vessel or bunker for the dry powder, a dust-tight space communicating with the former, wetting means contained in said space, a dosing device between the place of the wetting means in said space and the supply vessel or the bunker and by transport means for conducting moist powder out of the dust-tight space. Advantageously the dust-tight space may then comprise a first compartment communicating with the supply vessel or the bunker and a second compartment provided with the wetting means and being connected with the transport means for the evacuation of moist powder and the dosing device may be arranged between said two compartments. When it is ensured that the first compartment remains filled with powder to a given level, the dosing device will invariably receive an adequate amount of powder.

In order to facilitate and improve the precision of dosing it is advisable to provide a device for fluidizing the dry powder contained in the first compartment of the dust-tight space. The fluidized powder can be readily passed to a measuring recipient for dosing. The fluidizing device may be designed to pass a rising gas stream, for example, an air-stream across the mass of dry powder contained in the first compartment of the dust-tight space. In order to allow the gas blown into the first compartment for fluidizing the powder mass to escape dust-free therefrom, at least part of the compartment wall extending above the fluidized mass of dry powder contained in the first compartment of the dust-tight space during operation may consist of filter cloth.

Part of the wall of the second compartment of the dust-tight space located between the dosing device and the wetting means may likewise consist of filter cloth. If subsequent to dosing the powder still contains gas, the gas can as yet escape from the second compartment in a dust-free state. Moreover, no air can enter from the outside.

The dosing device may comprise a sluice vessel having an inlet orifice to be closed by a first flap and an outlet orifice to be closed by a second flap and means for alternately and consecutively opening and closing said flaps with a predetermined delay. Dosing is thus carried out batchwise with the aid of a measuring recipient which is alternately filled and emptied. The dosing device for metering and passing on the powder may, as an alternative be designed as a tourniquet sluice. Such a device operates without flaps so that the construction is simpler and filling and emptying of the sluice cells can be performed more rapidly.

The part of the dust-tight space comprising the wetting means may be constructed in the form of a shakeable vessel containing discrete metal bodies such as grains, lumps or pellets and having in its bottom or at the edge thereof in a standing wall at least one outlet orifice, which is large enough for passing the moist powder, but too narrow for passing bodies.

The invention will be explained more fully with reference to the embodiments of a powder dosing and wetting device shown in the drawing. The drawing shows in

Figure 1 a vertical sectional view of a powder dosing and wetting device embodying the invention,

Figure 2 a vertical sectional view of a variant of part of the device shown in Figure 1 and

Figure 3 a vertical sectional view of a variant of a further part of the device of Figure 1.

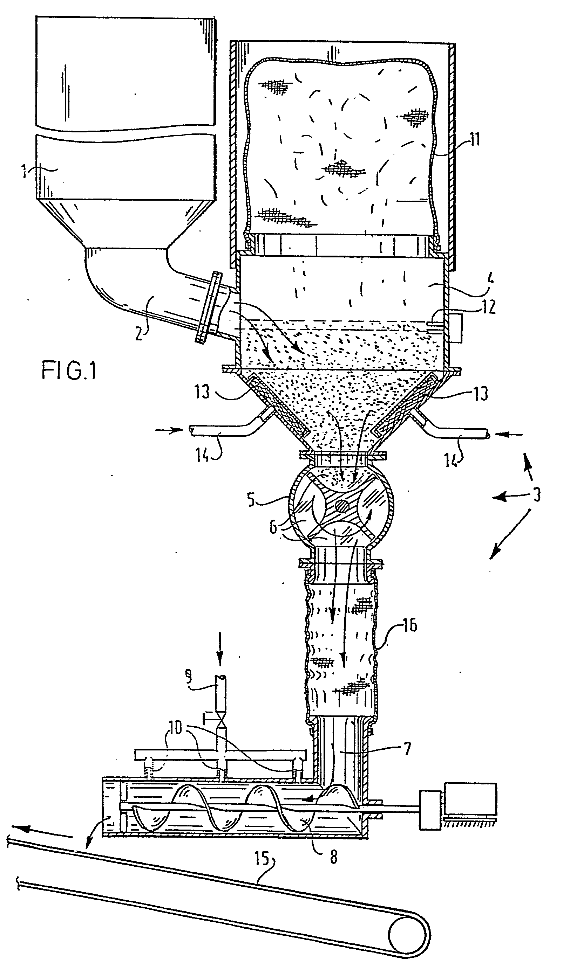

The device shown in Figure 1 comprises a supply vessel or bunker 1 containing dry powder, for example, manganese oxide ($MnO_2$) for the brick industry. This supply vessel communicates through a conduit 2 including a closing member (not shown) with a first compartment 4 in the upper part of a vessel designated generally by 3, having a dust-tight space, said compartment communicating through a tourniquet sluice 5 having cells 6 of given capacity with a second compartment 7 provided in the lower part of the vessel 3 and having a worm conveyor 8 and a wetting device 10 connected with a fluid pipe 9, for example, a water conduit.

At the top the compartment 4 is closed in dust-tight manner by means of an inverted bag 11 of filter cloth, which permits air or another gas to pass but does not pass powder and dust. The compartment 4 accommodates the sensor 12 of a level control (not shown), which ensures by opening and closing the closing member in the conduit 2 that the level of the powder poured into the compartment 4 from the supply vessel or the bunker 1 remains substantially the same.

The wall of the funnel-shaped bottom of the compartment 4 adjacent the tourniquet sluice 5 is covered by a porous mass 13, across which gas (air) supplied through ducts 14 is introduced by pressure. This gas or air serves to fluidize the powder mass contained in the compartment. The fluidization facilitates the flow of the powder and the cells 6 of the sluice 5 can thus be filled more accurately with powder so that dosing is improved.

The sluice 5 ejects each time an accurately metered powder portion into the second compartment 7, in which the worm conveyor 8 passes the dry powder on below the wetting device 10. Then the moist powder, which is no longer likely to whirl up dust, is conducted away by the worm conveyor 8 and poured into the conveyor belt 15, which passes the powder to a processing device, for example, the mixing and kneading machine of the brick works.

Part of the wall of the second compartment 7 consists of filter cloth 16, through which gas or air can escape in a dust-free state by excess pressure, whilst at any subatmospheric pressure caused by the worm conveyor 8 the air can flow in.

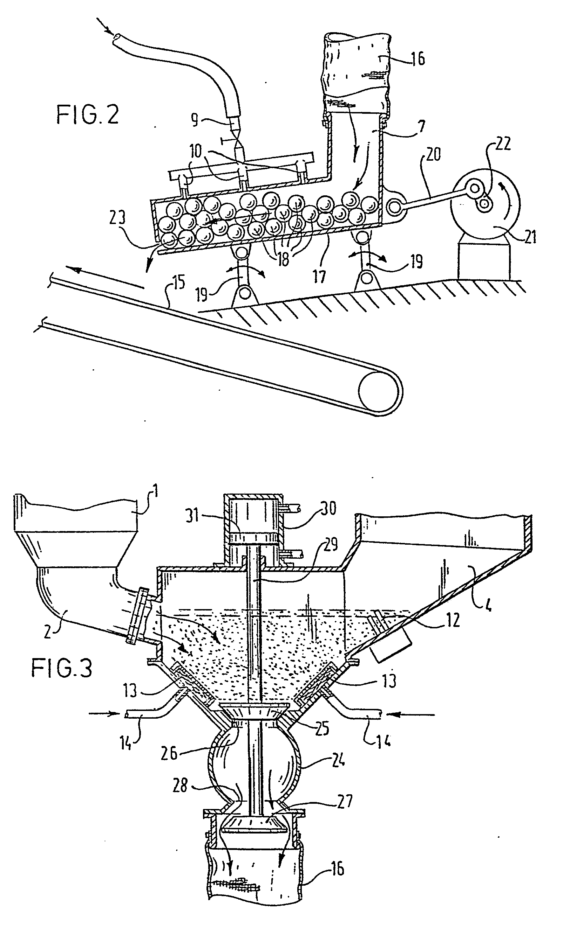

The device shown in Figure 2 differs from that of Figure 1 in that the worm conveyor 8 in the compartment 7 is replaced by an inclined, shakeable trough 17 provided with the wetting device 9, 10 and containing balls 18. The trough 17 is arranged on pivotable supports 19 and it can be shaken to and fro by a crank 20 and a crank shaft 22 driven by a motor having a flywheel 21. At the lower end the trough 17 has an outlet orifice 23, which can pass the moist powder, but which is too narrow for the balls 18.

Figure 3 shows a powder dosing and wetting device which corresponds with the device of Figure 1 with the exception of the construction of the dosing device. In this device dosing is not performed by means of a tourniquet sluice with cells as in Figure 1, but means of a measuring recipient 24 having an inlet orifice 26 that can be closed by a flap 25 and an outlet orifice 28 that can be closed by another flap 27. The flaps 25 and 27 are rigidly connected with one 'another in a manner such that when one orifice is opened the other orifice is closed. The flaps 25 and 27 are fastened to a common flap stem 29, which can be hydraulically or pneumatically moved up and down by a double-acting cylinder 30 with a piston 31.

## Claims

1. A method of dispensing powder at a preselected rate characterized in that dry powder is passed from a supply vessel or bunker (1) in a predetermined flow through a dust-tight space and is wetted in said space.

2. A method as claimed in Claim 1 characterized in that the dry powder is passed in dosed form, for example, in metered portions, from a first compartment (4) of the dust-tight space communicating with the supply vessel or the bunker (1) to a second compartment (7) of said space designed for wetting the powder.

3. A method as claimed in Claim 1 or 2 characterized in that prior to wetting the powder contained in the dust-right space is fluidized.

4. A method as claimed in Claims 2 and 3 characterized in that the powder is fluidized in the first compartment (4) of the dust-tight space.

5. A device for carrying out the method claimed in Claim 1 comprising a supply vessel or bunker for dry powder, a dust-tight space communicating with the former and a dosing device, characterized by wetting means (10) arranged in said space, the dosing device being arranged between the place of the wetting means (10) in said space and the supply vessel or the bunker (1) and transport means for conducting moist powder out of the dust-tight space.

6. A device as claimed in Claim 5 for carrying out the method claimed in Claim 2 characterized in that the dust-tight space comprises a first compartment (4) communicating with the supply vessel or the bunker and a second compartment (7) provided with the wetting means (10) and communicating with the transport means for the evacuation of moist powder and in that the dosing device is arranged between said two compartments (4, 7).

7. A device as claimed in Claim 6 for carrying out the method claimed in Claim 4 characterized by a device for fluidizing the dry powder contained in the first compartment (4) of the dust-tight space.

8. A device as claimed in Claim 7 characterized in that the fluidizing device is designed to conduct a rising gas stream, for example, an air stream, across the mass of dry powder contained in the first compartment (4) of the dust-tight space.

9. A device as claimed in Claim 8 characterized in that at least part of the compartment wall extending above the fluidized mass of dry powder contained in the first compartment (4) during operation consists of filter cloth (11).

10. A device as claimed in Claim 7, 8 or 9 characterized in that at least part of the wall of the second compartment (7) of the dust-tight space located between the dosing device and the wetting means (10) consists of filter cloth.

11. A device as claimed in anyone of Claims 5 to 10 characterized in that the dosing device comprises a sluice vessel (24) having an inlet orifice (26) that can be closed by a first flap (25) and an outlet orifice (28) that can be closed by a second flap (27) and means (29—31) for alternately and consecutively opening and closing said flaps (25, 27) with predetermined delay.

12. A device as claimed in anyone of Claims 5 to 10 characterized in that the dosing device is constructed in the form of a tourniquet sluice (5).

13. A device as claimed in Claim 5 characterized in that the part of the dust-tight space comprising the wetting means (10) is constructed in the form of a shakeable vessel (17) containing discrete metal bodies such as grains, lumps or balls (18) and having in its bottom or at the edge thereof in a standing wall at least one outlet orifice (23) and in that the or each outlet orifice (23) is large enough for passing the moist powder, but too narrow for passing said bodies (18).

**Patentansprüche**

1. Verfahren zur Ausgabe von Pulver in einem vorgewählten Maße, dadurch gekennzeichnet, daß trockenes Pulver von einem Vorrats- oder Sammelbehälter (1) mit einem vorbestimmten Durchfluß durch einen staubdichten Raum geleitet und in diesem Raum angefeuchtet wird.

2. Verfahren nach Anspruch 1, dadurch gekennzeichnet, daß das trockene Pulver in dosierter Form, beispielsweise in abgemessenen Portionen, von einer ersten Kammer (4) des staubdichten Raum, die mit dem Vorrats- oder Sammelbehälter (1) in Verbindung steht, zu einer zweiten Kammer (7) des Raums, die zum Anfeuchten des Pulvers ausgebildet ist, gebracht wird.

3. Verfahren nach Anspruch 1 oder 2, dadurch gekennzeichnet, daß vor dem Anfeuchten das im staubdichten Raum vorhandene Pulver fluidisiert wird.

4. Verfahren nach Anspruch 2 oder 3, dadurch gekennzeichnet, daß das Pulver in der ersten Kammer (4) des staubdichten Raums fluidisiert wird.

5. Vorrichtung zur Durchführung des Verfahrens nach Anspruch 1 mit einem Vorrats- oder Sammelbehälter für trockenes Pulver, einem mit diesem in Verbindung stehenden staubdichten Raum und einer Dosiervorrichtung, gekennzeichnet durch eine in dem Raum angeordnete Befeuchtungsvorrichtung (10), wobei die Dosiervorrichtung zwischen dem Ort der Befeuchtungsvorrichtung (10) in dem Raum und dem Vorrats- oder Sammelbehälter (1) angeordnet ist, und eine Transportvorrichtung zum Transportieren von feuchtem Pulver aus dem staubdichten Raum.

6. Vorrichtung nach Anspruch 5 zur Durchführung des Verfahrens nach Anspruch 2, dadurch gekennzeichnet, daß der staubdichte Raum eine mit dem Vorrats- oder Sammelbehälter in Verbindung stehende erste Kammer (4) und eine zweite Kammer (7) aufweist, die mit der Befeuchtungsvorrichtung (10) versehen ist und mit der Transportvorrichtung zum Abtransportieren von feuchtem Pulver in Verbindung steht, und daß die Dosiervorrichtung zwischen den beiden Kammern (4, 7) angeordnet ist.

7. Vorrichtung nach Anspruch 6 zur Durchführung des Verfahrens nach Anspruch 4, gekennzeichnet durch eine Vorrichtung zum Fluidisieren des in der ersten Kammer (4) des staubdichten Raumes enthaltenen trockenen Pulvers.

8. Vorrichtung nach Anspruch 7, dadurch gekennzeichnet, daß die Fluidisiervorrichtung so ausgebildet ist, daß sie einen aufsteigenden Gasstrom, beispielsweise einen Luftstrom, durch die in der ersten Kammer (4) des staubdichten Raumes enthaltene trockene Pulvermenge leitet.

9. Vorrichtung nach Anspruch 8, dadurch gekennzeichnet, daß zumindest ein Teil der sich während des Betriebes über die in der ersten Kammer enthaltene fluidisierte trockene Pulvermenge erstreckenden Kammerwand aus Filtergewebe (11) besteht.

10. Vorrichtung nach Anspruch 7, 8 oder 9, dadurch gekennzeichnet, daß zumindest ein Teil der zwischen der Dosiervorrichtung und der Befeuchtungsvorrichtung (10) angeordneten Wand der zweiten Kammer (7) des staubfreien Raumes aus Filtergewebe besteht.

11. Vorrichtung nach einem der Ansprüche 5—10, dadurch gekennzeichnet, daß die Dosiervorrichtung einen Schleusenbehälter (24) mit einer Einlaßöffnung (26), die durch eine erste Klappe (25) verschlossen werden kann, und eine Auslaßöffnung (28), die durch eine zweite Klappe (27) verschlossen werden kann, und eine Vorrichtung (29—31) zum abwech-

selnden und aufeinanderfolgenden Öffnen und Schließen der Klappen (25, 27) mit einer vorher bestimmten Verzögerung aufweist.

12. Vorrichtung nach einem der Ansprüche 5—10, dadurch gekennzeichnet, daß die Dosiervorrichtung in Form einer Tourniquet-Schleuse (5) gebaut ist.

13. Vorrichtung nach Anspruch 5, dadurch gekennzeichnet, daß der Teil des staubfreien Raumes, der die Befeuchtungsvorrichtung (10) aufweist, in Form eines rüttelbaren Behälters (17) gebaut ist, der einzelne Metallkörper wie beispielsweise Körner, Klumpen oder Kugeln (18) enthält und in seinem Boden oder an dessen Rand in einer stehenden Wand zumindest eine Auslaßöffnung (23) aufweist und daß die oder jede Auslaßöffnung (23) groß genug ist, um das feuchte Pulver hindurchzulassen, aber zu eng ist, um die Körper (18) durchzulassen.

## Revendications

1. Procédé pour distribuer une poudre à une vitesse présélectionnée, caractérisé en ce que l'on fait passer la poudre sèche d'un récipient d'alimentation ou réservoir (1) à un débit prédéterminé à travers un espace étanche à la poussière et on l'humidifie dans cet espace.

2. Procédé selon la revendication 1, caractérisé en ce que l'on fait passer la poudre sèche sous forme de doses, par exemple en portions mesurées, d'un premier compartiment (4) de l'espace étanche à la poussière un communication avec la récipient d'alimentation ou réservoir (1) à un second compartiment (7) dudit espace destiné à humidifier la poudre.

3. Procédé selon la revendication 1 ou la revendication 2, caractérisé en ce que, avant l'humidification, la poudre contenue dans l'espace étanche à la poussière est fluidifiée.

4. Procédé selon les revendications 2 et 3, caractérisé en ce que la poudre est fluidifiée dans le premier compartiment (4) de l'espace étant à la poussière.

5. Dispositif pour la mise en oeuvre du procédé revendiqué dans la revendication 1, comprenant un récipient d'alimentation ou réservoir pour une poudre sèche, un espace étanche à la poussière en communication avec le précédent et un appareil de dosage, caractérisé par des moyens d'humidification (10) disposés dans ledit espace, l'appareil de dosage étant disposé entre l'emplacement des moyens d'humidification (10) dans ledit espace et le récipient d'alimentation ou réservoir (1), et des moyens de transport pour évacuer la poudre humide hors de l'espace étanche à la poussière.

6. Dispositif selon la revendication 1 pour la mise en oeuvre du procédé selon la revendication 2, caractérisé en ce que l'espace étanche à la poussière comprend un premier compartiment (4) en communication avec le récipient d'alimentation ou réservoir et un second compartiment (7) équipé des moyens d'humidification (10) et en communication avec des moyens de transport pour l'évacuation de la poudre humide, et en ce que l'appareil de dosage est disposé entre lesdits deux compartiments (4, 7).

7. Dispositif selon la revendication 6 pour la mise en oeuvre du procédé selon la revendication 4, caractérisé par un appareil pour fluidifier la poudre sèche contenue dans le premier compartiment (4) de l'espace étanche à la poussière.

8. Dispositif selon la revendication 7, caractérisé en ce que l'appareil de fluidification est destiné à conduire un courant gazeux ascendant (par exemple un courant d'air, à travers la masse de poudre sèche contenue dans le premier compartiment (4) de l'espace étanche à la poussière.

9. Dispositif selon la revendication 8, caractérisé en ce qu'au moins une partie de la paroi du compartiment s'étendant au-dessus de la masse fluidifiée de la poudre sèche contenue dans le premier compartiment (4) pendant la mise en oeuvre consiste en un tissu filtrant (11).

10. Dispositif selon l'une quelconque des revendications 7, 8 ou 9, caractérisé en ce qu'au moins une partie de la paroi du second compartiment (7) de l'espace étanche à la poussière se trouvant entre l'appareil de dosage et les moyens d'humidification (10) consiste en un tissu filtrant.

11. Dispositif selon l'une quelconque des revendications 5 à 10, caractérisé en ce que l'appareil de dosage comprend un récipient de vidange (24) ayant un orifice d'admission (26) qui peut être fermé par un premier clapet (25) et un orifice de sortie (28) qui peut être fermé par un second clapet (27) et des moyens (29—31) pour ouvrir et fermer alternativement et consécutivement les clapets (25, 27) dans un laps de temps prédéterminé.

12. Dispositif selon l'une quelconque des revendications 5 à 10, caractérisé en ce que l'appareil de dosage est construit sous forme d'un tourniquet de vidange (5).

13. Dispositif selon la revendication 5, caractérisé en ce que la partie de l'espace étanche à la poussière comprenant les moyens d'humidification (10) est construit sous la forme d'un récipient (17) secouable contenant des corps métalliques séparés tels que des grains, billes ou boules (18) et ayant dans son fond ou le bord de celui-ci dans une paroi de support au moins un orifice de sortie (23) et en ce que l'orifice ou chacun des orifices (23) est suffisamment large pour laisser passer la poudre humide, mais trop étroit pour laisser passer lesdits corps (18).

FIG.1

FIG.2

FIG.3